# EUROPEAN PATENT APPLICATION

(11) **EP 3 991 543 A1**
(43) Date of publication of application: **04.05.2022**
(21) Application number: 20831095.3
(22) Date of filing: 25.06.2020
(51) Int. Cl.: A01D 69/00, A01F 12/22, A01F 12/32, A01F 12/48, A01F 12/52, A01D 41/12

(54) **THRESHING DEVICE**

(30) Priority: 27.06.2019 JP 2019120475; 22.11.2019 JP 2019211314; 23.06.2020 JP 2020107679
(71) Applicant: Kubota Corporation, Osaka-shi, Osaka 5568601 (JP)
(72) Inventor: HAYASHI, Sotaro, Sakai-shi, Osaka 5900823 (JP); FUJITA, Toshiaki, Sakai-shi, Osaka 5900823 (JP); SAITO, Naoki, Sakai-shi, Osaka 5900823 (JP); MATSUNAGA, Shun, Sakai-shi, Osaka 5900823 (JP); TERANISHI, Haruyuki, Sakai-shi, Osaka 5900823 (JP); HORI, Takanori, Sakai-shi, Osaka 5900823 (JP); HORIUCHI, Masayuki, Sakai-shi, Osaka 5900823 (JP)
(74) Representative: Cabinet Beau de Loménie
(86) International application number: PCT/JP2020/025012
(87) International publication number: WO 2020/262530

(57) **Abstract**

A threshing apparatus 1 includes a threshing unit 41 that has a receiving net 23 and threshes crops, and a sorting unit 42 that is provided below the threshing unit 41 and sorts grain from a threshed product that has leaked from the receiving net 23. The sorting unit 42 includes a sorter 24 that sorts grain as a sorted product from the threshed product, a first product collector 26 that collects the sorted product as a first product, a second product collector 27 that collects, as a second product, the threshed product that was not sorted as the sorted product, a second product returner 32 that returns the second product collected by the second product collector 27 to the sorter 24, and a return amount detector 71 that detects the return amount of the second product to be returned to the sorter 24.

## Description

### Technical Field

The present invention relates to a threshing apparatus including a threshing unit that has a receiving net and threshes crops, and a sorting unit that is provided below the threshing unit and sorts grain from a threshed product that has leaked from the receiving net.

### Description of Related Art

Conventionally, a threshing apparatus for threshing crops from harvested grain culms has been used. One such threshing apparatus is described in, for example, Japanese Patent Application Laid-Open No. 2019-76061.

The threshing apparatus described in Japanese Patent Application Laid-Open No. 2019-76061 includes a threshing drum for threshing reaped grain culms, and is configured such that the threshed product falls from the receiving net onto a swinging sorting shelf below and is subjected to sifting processing. Also, this threshing apparatus is provided with a layer thickness sensor that detects the layer thickness of the processed product flowing on the swinging sorting shelf, and the opening degree of an opening/closing sieve is controlled in accordance with the detection result of the layer thickness sensor. Specifically, when the layer thickness of the processed product on the swinging sorting shelf increases, the opening/closing sieve is controlled in the opening direction, and when the layer thickness of the processed product on the swing sorting shelf decreases, the opening/closing sieve is controlled in the closing direction.

### Prior Art Documents

### Patent Documents

Patent Document 1: Japanese Patent Application Laid-Open No. 2019-76061

### Summary

### Problem to be Solved by the Invention

The threshing apparatus described in Japanese Patent Application Laid-Open No. 2019-76061 is provided with a first phase spiral that transfers a first product (clean grains) collected below the swinging sorting shelf and a second phase spiral that transfers a second product (tailings). If the amount of the threshed product from the threshing drum increases, the opening/closing sieve is controlled in the opening direction, which leads to a phenomenon in which cut straw included in the processed product leaking from the opening/closing sieve increases. If a large amount of cut straw leaks from the opening/closing sieve, it is envisioned that the amount of the second product will also increase, and due to the amount of the second product transferred to the swinging sorting shelf increasing, the layer thickness of the swinging shorting shelf will also increase, which results in incurring a decrease in the sorting performance.

In view of this, a threshing apparatus is required which can suppress a decrease in sorting performance even if the amount of processed product increases.

### Solutions

A characteristic configuration of the threshing apparatus according to the present invention is a threshing apparatus including a threshing unit that has a receiving net and is configured to thresh a crop, and a sorting unit that is provided below the threshing unit and is configured to sort grain from a threshed product that has leaked from the receiving net, in which the sorting unit includes: a sorter configured to sort the grain as a sorted product from the threshed product; a first product collector configured to collect the sorted product as a first product; a second product collector configured to collect, as a second product, the threshed product that was not sorted as the sorted product; a second product returner configured to return the second product collected by the second product collector to the sorter; and a return amount detector configured to detect a return amount of the second product to be returned to the sorter.

With such a characteristic configuration, for example, the amount of the threshed product supplied from the threshing unit to the sorting unit can be adjusted, or the sorting condition (sorting degree) by the sorting unit can be adjusted in accordance with the return amount of the second product. Accordingly, it is possible to suppress a decrease in the sorting ability of the sorting unit in the threshing apparatus accompanying an increase in the amount of the second product.

It is also preferable that the sorter has a sorting amount of the threshed product to be sorted as the sorted product which sorting amount is changed in accordance with the return amount.

With such a configuration, the sorting ability can be changed in accordance with the return amount. Accordingly, it is possible to suppress a decrease in the sorting ability of the sorting unit accompanying an increase in the return amount.

It is also preferable that the sorting amount of the sorter is increased in accordance with an increase in the return amount.

With such a configuration, the collection amount of the first product can be increased when the return amount increases. Accordingly, it is possible to suppress an increase in the amount of the threshed product and the second product waiting to be sorted in the sorting unit, and to prevent retention.

It is also preferable that the sorter is provided with a chaff sieve including a plurality of chaff lips that are arranged side by side in a transport direction in which the threshed product is transported, the plurality of chaff lips each having a changeable opening degree, and the opening degree of each of the chaff lips is increased in accordance with an increase in the return amount.

With such a configuration, if the return amount is large, the flow speed of the threshed product and the second product on the chaff sieve can be increased. Accordingly, it is possible to suppress an increase in the amount of the threshed product and the second product waiting to be sorted on the chaff sieve, and to prevent retention.

It is also preferable that the sorting unit is provided with a winnowing fan configured to generate sorting air along the transport direction in an amount that is increased in accordance with an increase in the return amount.

With such a configuration, if the return amount is large, the sorting air can be increased to make it easier to blow away the cut straw and the like. Accordingly, it is possible to suppress an increase in the amount of the threshed product and the secondary product waiting to be sorted on the chaff sieve, and to prevent retention.

It is also preferable that the sorting unit is provided with a threshed product detector configured to detect an amount of the threshed product that leaks from the receiving net, and the sorting amount of the sorter is changed in accordance with the amount of the threshed product.

With such a configuration, the sorting ability can be changed if the amount of the threshed product that has leaked from the receiving net is large. Accordingly, it is possible to suppress a decrease in the sorting ability of the sorting unit accompanying an increase in the amount of the threshed product.

It is also preferable that the threshing unit includes a threshing drum that has a cylindrical drum body with an outer peripheral portion to which a plurality of threshing teeth are attached, and a threshing drum shaft that supports the drum body, and the drum body conveys the crop in an amount that is reduced in accordance with an increase in the return amount.

With such a configuration, if the return amount is large, the retention time of the crop in the threshing drum can be lengthened, and the amount of the threshed product leaking from the threshing drum can be reduced. Accordingly, it is possible to suppress an increase in the amount of the threshed product and the second product waiting to be sorted in the sorting unit, and to prevent retention.

It is also preferable that the threshing unit and the sorting unit are provided in a travel device body, and the travel device body has a traveling speed that is reduced in accordance with an increase in the return amount.

With such a configuration, if the return amount is large, the traveling speed of the travel device body can be reduced and the amount of crops supplied to the threshing unit can be reduced. Accordingly, it is possible to suppress an increase in the amount of the threshed product and the second product waiting to be sorted in the sorting unit, and to prevent retention.

It is also preferable that the return amount detector is configured to measure the return amount by coming into contact with the second product discharged by the second product returner.

With such a configuration, the return amount detector can accurately measure the return amount of the second product by coming into contact with the discharged second product.

Also, it is suitable that the return amount detector includes (i) a swing arm that is located on a discharge extension of the second product discharged by the second product returner and that swings in response to the discharged second product coming into contact therewith, and (ii) a measurement portion configured to measure the return amount based on a swing angle of the swing arm.

With such a configuration, the swing arm swings due to the second product coming into contact therewith, but the swing angle changes in accordance with the amount of the second product to be discharged. Therefore, the measuring unit can obtain the return amount from the swing angle of the swing arm.

It is also preferable that the second product returner includes a guide configured to guide the discharged second product toward the swing arm.

With such a configuration, the discharged second product can be guided by the guide to be accurately brought into contact with the swing arm.

It is also preferable that the guide has a planar shape extending along a swing path of the swing arm, and is provided laterally to the swing arm and adjacent to the swing arm in a swing axis direction of the swing arm, and the guide is configured such that when the swing arm swings in response to contact with the second product, a separation distance between a side portion of the swing arm and the guide increases in accordance with an increase in an swing amount of the swing.

In order for the return amount detector to accurately detect the return amount of the second product, it is preferable that the swing arm swings accurately in accordance with the return amount of the second product. If the separation distance between the swing arm and the guide changes accompanying the swinging of the swing arm, the detection accuracy of the return amount detector is affected. With this configuration, the guide is provided laterally to the swing arm in a state of being adjacent to the swing arm in the swing axis direction of the swing arm. Even if the return amount of the second product is small, the second product scatters along the planar shape of the guide, and therefore the swing arm that is not swinging and the second product can easily come into contact with each other, and the swinging of the swing arm is prompted. For this reason, the detection sensitivity of the return amount detector improves. Also, in accordance with an increase in the swing amount of the swing arm, the separation distance between the side portion of the swing arm and the guide is increased. For this reason, if the return amount of the second product is large, the second product slips through the gap between the side portion of the swing arm and the guide, whereby excessive swinging of the swing arm is suppressed. Due to this, even if the return amount of the second product is large, it is more difficult for the swing arm to fully swing to the maximum of the swing range, and thus the magnitude of the return amount of the second product can be measured in as wide a range as possible. That is, even if the return amount of the second product is small, the return amount detector can measure the return amount with good sensitivity and can measure the magnitude of the return amount in a wide range.

It is also preferable that the guide has a planar shape extending along a swing path of the swing arm, and is provided laterally to the swing arm and adjacent to the swing arm in a swing axis direction of the swing arm, and the guide is configured such that when the swing arm swings in response to contact with the second product, a separation distance between a side portion of the swing arm and the guide is unchanged, regardless of a magnitude of an amount of the swing.

If a configuration is used in which the separation distance between the swing arm and the guide becomes smaller the more the swing arm swings, it is thought that the swing arm will suddenly fully swing to the maximum of the range at the time when the return amount of the second product exceeds a predetermined amount. In this case, it is conceivable that the detection value of the return amount detector remains stuck at the maximum value, and if the return amount of the second product is large, the return amount detector will not be able to accurately measure the return amount. In this configuration, the separation distance between the side portion of the swing arm and the guide is the same regardless of the magnitude of the swinging amount, and therefore it is less likely that the swing arm will swing out of range compared with the configuration in which the separation distance between the swing arm and the guide is smaller the more the swing arm swings. Accordingly, the return amount detector can measure the magnitude of the return amount in a wide range.

It is also preferable that the return amount detector is supported by a side wall of the threshing unit.

With such a configuration, the return amount detector is stably supported by the side wall having high rigidity, and therefore a correct measurement operation can be performed over a long period of time.

It is also preferable that the return amount detector is supported on an outer side portion of the side wall.

With such a configuration, since the threshed product is not present on the outer side portion of the side wall, there is no disadvantage such as the threshed product coming into contact with the support portion of the return amount detector and being damaged.

It is also preferable that the return amount detector is supported on an inner side portion of the side wall.

With such a configuration, the return amount detector is supported by the side wall at a position as close as possible to the detection target location of the second product, and therefore the return amount detector can be made compact.

It is also preferable that the threshing apparatus further includes a cover body for covering an upper portion of the return amount detector.

With such a configuration, even if the threshed product is present on the inner side of the side wall, it is possible to prevent the threshed product from falling on the return amount detector using the cover body, and it is possible to avoid the occurrence of a failure in the return amount detector.

### Brief Description of the Drawings

Fig. 1 is a lateral view of a combine including a threshing apparatus.
Fig. 2 is a plan view of the combine including the threshing apparatus.
Fig. 3 is a longitudinal cross sectional lateral view of the threshing apparatus.
Fig. 4 is a layout diagram of a return amount detector and a second product discharge port.
Fig. 5 is a layout diagram of the return amount detector and the second product discharge port.
Fig. 6 is a layout diagram of the return amount detector and the second product discharge port.
Fig. 7 is a lateral view of the return amount detector.
Fig. 8 is an example of a return amount detected by the return amount detector.
Fig. 9 is a diagram showing an example of changing an opening degree of a chaff lip.
Fig. 10 is a diagram showing an arrangement relationship between a swing arm and a guide.
Fig. 11 is a diagram showing an arrangement relationship between the swing arm and the guide.
Fig. 12 is a graph showing the return amount of the second product and the swing amount of the swing arm for each shape of the guide.
Fig. 13 is a layout diagram of a return amount detector and a second product discharge port in another embodiment.
Fig. 14 is a layout diagram of a return amount detector and a second product discharge port in another embodiment.
Fig. 15 is a perspective view of the return amount detector in a small return amount state in another embodiment.
Fig. 16 is a perspective view of the return amount detector in a large return amount state in another embodiment.
Fig. 17 is a longitudinal cross-sectional lateral view of a threshing apparatus of another embodiment.
Fig. 18 is a layout diagram of a return amount detector and a second product discharge port in another embodiment.
Fig. 19 is a layout diagram of a return amount detector and a second product discharge port in another embodiment.
Fig. 20 is a layout diagram of a return amount detector and a second product discharge port in another embodiment.
Fig. 21 is a layout diagram of a return amount detector and a second product discharge port in another embodiment.
Fig. 22 is a layout diagram of a return amount detector and a second product discharge port in another embodiment.
Fig. 23 is a layout diagram of a return amount detector and a second product discharge port in another embodiment.

### Embodiments

The threshing apparatus according to the present invention is configured to be able to prevent deterioration of sorting performance even if the amount of a processed product increases. Hereinafter, a threshing apparatus 1 of the present embodiment will be described.

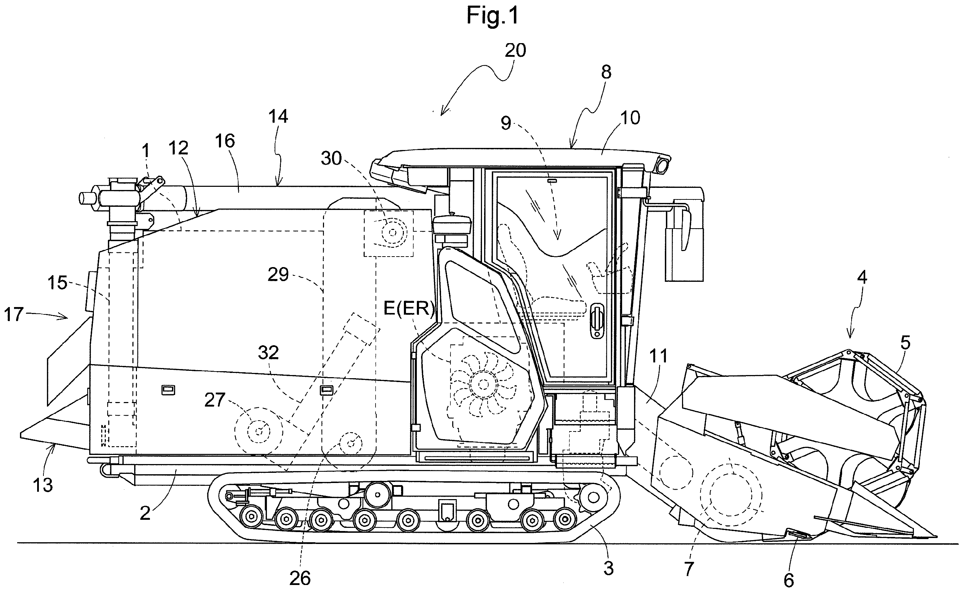

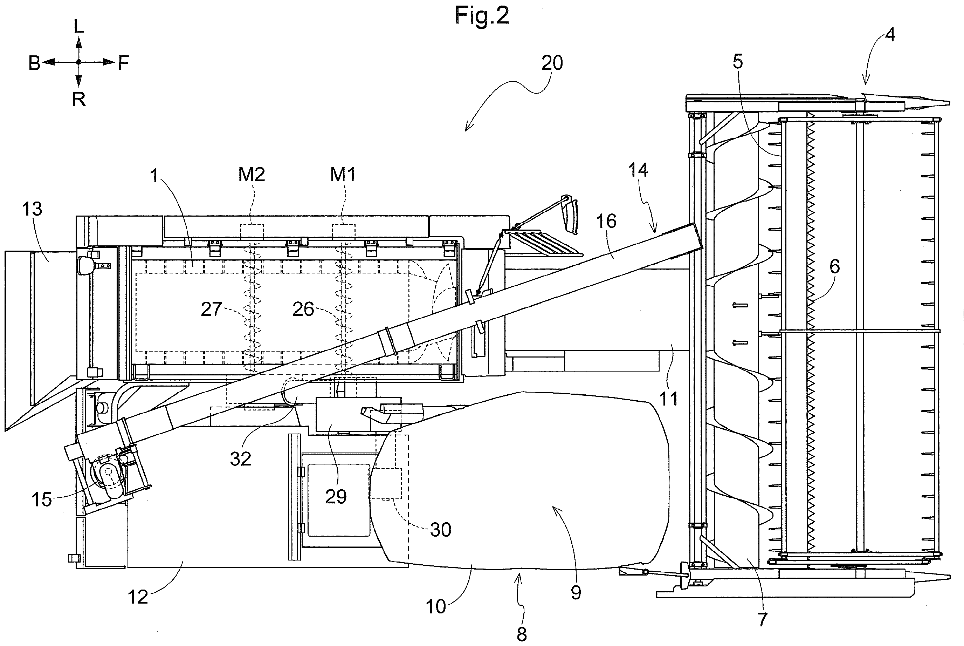

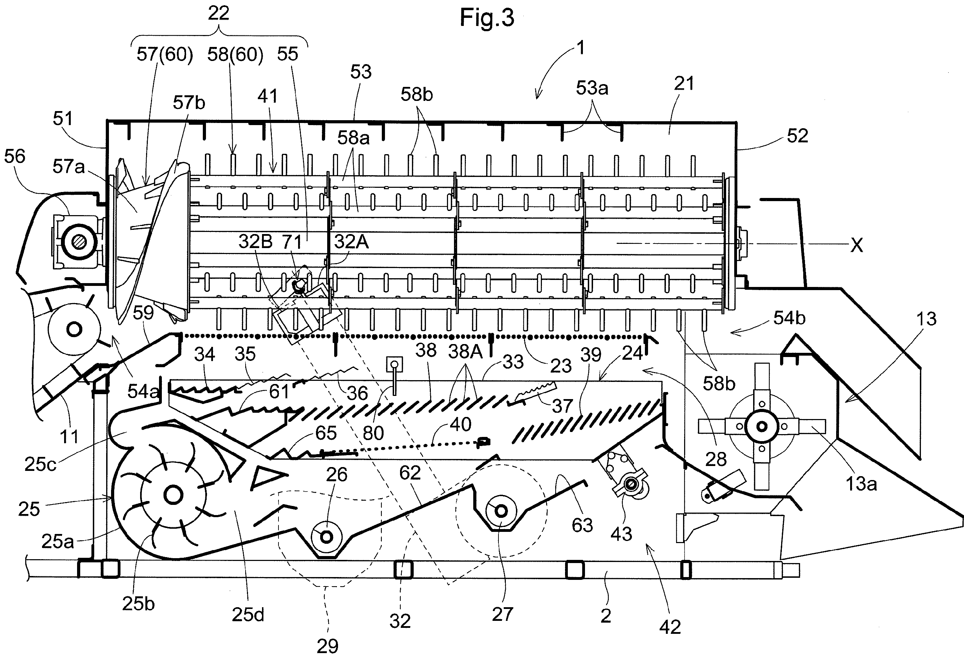

Fig. 1 is a lateral view of a combine 20 including the threshing apparatus 1 of the present embodiment. Fig. 2 is a plan view of the combine 20 including the threshing apparatus 1 of the present embodiment. Also, Fig. 3 is a cross-sectional view of the threshing apparatus 1. Note that hereinafter, the combine 20 of the present embodiment will be described taking a so-called ordinary combine as an example. Of course, the combine 20 may also be a head-feeding combine.

Here, in order to facilitate comprehension, in the present embodiment, unless otherwise specified, "front" (the direction of arrow F shown in Figs. 1 and 2) means frontward in the body front-rear direction (traveling direction), and "rear" (the direction of arrow B shown in Figs. 1 and 2) means rearward in the body front-rear direction (traveling direction). Also, "up" (the direction of arrow U shown in Fig. 1) and "down" (the direction of arrow D shown in Fig. 1) are in a positional relationship in the body vertical direction (vertical direction), and indicate relationships in the above-ground height. Furthermore, the left-right direction or the lateral direction is the body crossing direction (body width direction) orthogonal to the body front-rear direction, that is, "left" (the direction of arrow L shown in Fig. 2) and "right" (the direction of arrow R shown in Fig. 2) mean the left and right directions of the body, respectively.

As shown in Figs. 1 and 2, the combine 20 includes a body frame 2 and a crawler traveling apparatus 3. A reaping portion 4 for reaping planted grain culms is provided in front of the travel device body 17. The reaping portion 4 is provided with a raking reel 5 for raking in the planted grain culms, a reaping blade 6 for cutting the planted grain culms, and an auger 7 for raking in the reaped grain culms.

A driving cabin 8 is provided on the right side of the front portion of the travel device body 17. The driving cabin 8 is provided with a driving portion 9 in which a driver rides, and a cabin 10 covering the driving portion 9. An engine room ER is provided below the driving portion 9. In addition to an engine E, the engine room ER houses an exhaust purification apparatus, a cooling fan, a radiator, and the like. The power of the engine E is transmitted to the crawler traveling apparatus 3, a threshing drum 22 in the threshing apparatus 1, a swing drive mechanism 43, and the like using a power transmission structure (not shown). The threshing drum 22 and the swing drive mechanism 43 will be described later.

The threshing apparatus 1 for threshing the reaped grain culms (corresponding to "crops") is provided rearward of the reaping portion 4. A feeder 11 for transporting the reaped grain culms toward the threshing apparatus 1 is provided spanning between the reaping portion 4 and the threshing apparatus 1. A grain tank 12 for storing the threshed grain is provided laterally to the threshing apparatus 1. The grain tank 12 is configured to be able to swing about an axis extending in the vertical direction, and the grain tank 12 is configured to be able to swing open and closed between a working position and a maintenance position. A waste straw shredding apparatus 13 including a rotary blade 13a is provided at the rear of the threshing apparatus 1.

The combine 20 is provided with a grain discharge apparatus 14 for discharging the grain in the grain tank 12 to the outside. A vertical transporter 15 for transporting the grain in the grain tank 12 upward, a horizontal transporter 16 for transporting the grain from the vertical transporter 15 toward the outside of the body are provided in the grain discharge apparatus 14. The grain discharge apparatus 14 is configured to be able to rotate about the axis of the vertical transporter 15. The lower end portion of the vertical transporter 15 is in communication with and connected to the bottom portion of the grain tank 12. The end portion of the horizontal transporter 16 on the vertical transporter 15 side is in communication with and connected to the upper end portion of the vertical transporter 15 and is supported so as to be able to swing up and down.

In the present embodiment, the threshing apparatus 1 is provided on the travel device body 17. The threshing apparatus 1 includes a threshing unit 41 for threshing crops and a sorting unit 42. Accordingly, the threshing unit 41 and the sorting unit 42 are provided in the travel device body 17. The threshing unit 41 is arranged at the upper portion of the threshing apparatus 1, and a receiving net 23 is provided at the lower portion of the threshing unit 41. The sorting unit 42 (excluding the "return amount detector 71" described later in this embodiment) is arranged below the threshing unit 41 and is configured to sort grain from a processed product (corresponds to "threshed product") that has leaked from the receiving net 23. The sorting unit 42 includes a swinging sorting apparatus 24 (an example of a "sorter"), a first product collector 26, a second product collector 27, a second product returner 32, and a return amount detector 71.

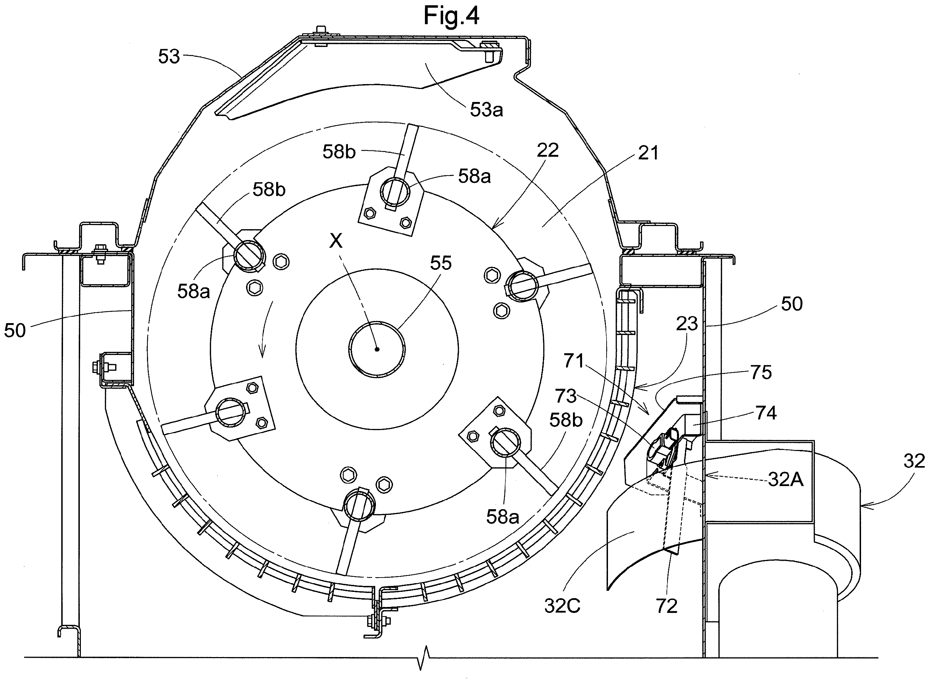

The threshing unit 41 accommodates the threshing drum 22 in a threshing chamber 21, and includes the receiving net 23 at the lower portion of the threshing drum 22. The threshing chamber 21 is formed as a space surrounded by a front wall 51 on the front side, a rear wall 52 on the rear side, left and right side walls 50 (see Fig. 4), and a top plate 53 covering the upper portion. A supply port 54a through which a harvested product (corresponding to "crops") is supplied is formed in a portion of the threshing chamber 21 below the front wall 51, and a guide bottom plate 59 is arranged at the bottom portion of the supply port 54a. Also, a debris discharge port 54b is formed in a portion of the threshing chamber 21 below the rear wall 52.

The threshing drum 22 has a drum body 60 and a rotation support shaft 55 (an example of a "threshing drum shaft"). As shown in Fig. 3, the drum body 60 is formed in one piece by a raking portion 57 at the front end portion and a threshing processing portion 58 at a position rearward of the raking portion 57. The raking portion 57 includes a double-helical spiral blade 57b on the outer circumferential portion of a tapered base portion 57a whose diameter decreases toward the front end of the threshing drum 22. The threshing processing portion 58 has a plurality of rod-shaped threshing tooth support members 58a and a plurality of threshing teeth 58b. The plurality of rod-shaped threshing tooth support members 58a are provided spaced apart from each other at a predetermined interval in the peripheral direction of the cylindrical drum body 60. Each of the plurality of threshing teeth 58b protrudes from the outer peripheral portion of each of the plurality of threshing tooth support members 58a, and is attached spaced apart from other threshing teeth 58b at a predetermined interval along the rotation axis X in a front-rear-facing orientation.

The rotation support shaft 55 extends along the rotation axis X and penetrates through the front wall 51 and the rear wall 52 in the front-rear direction. The drum body 60 and the rotation support shaft 55 rotate integrally about the rotation axis X. That is, the front end of the rotation support shaft 55 is rotatably supported by the front wall 51 via a bearing, and similarly, the rear end of the rotation support shaft 55 is rotatably supported by the rear wall 52 via a bearing. In this threshing unit 41, the driving rotational force is transmitted from a rotation drive mechanism 56 to the front end portion of the rotation support shaft 55.

A plurality of plate-shaped debris conveying valves 53a are provided on the inner surface (lower surface) of the top plate 53 at a predetermined interval along the front-rear direction. The plurality of debris conveying valves 53a are provided in an orientation of being inclined with respect to the rotational axis X in a plan view so as to cause a force for moving rearward to act on the processed product rotating together with the threshing drum 22 in the threshing chamber 21.

The receiving net 23 is formed in a circular arc shape so as to surround a region extending below the threshing drum 22 and both lateral sides of the threshing drum 22. Gaps are formed in the receiving net 23 due to a combination of a plurality of longitudinal frames arranged at a predetermined interval along the front-rear direction and widthwise frames in a front-rear-facing orientation supported on each longitudinal frame (see Fig. 4). The processed product can leak from the gaps formed in the receiving net 23.

In the threshing apparatus 1 of the present embodiment, the reaped grain culms supplied to the threshing chamber 21 are referred to as a harvested product, and the harvested product threshed in the threshing chamber 21 is referred to as a processed product (corresponding to "threshed product"). The processed product includes grain, cut straw, and the like. The first product is the processed product that mainly includes grain, and the second product is the processed product that includes grain that has been insufficiently processed into single grains, cut straw, and the like.

In the threshing unit 41, the harvested product from the feeder 11 is supplied to the threshing chamber 21 via the supply port 54a. The supplied harvested product is raked toward the rear of the threshing drum 22 along the guide bottom plate 59 by the spiral blade 57b of the raking portion 57, and is supplied to the threshing processing portion 58. In the threshing processing portion 58, threshing is performed as a result of the harvested product being subjected to threshing processing by the threshing teeth 58b and the receiving net 23 accompanying the rotation of the threshing drum 22.

When the threshing is performed in this manner, the processed product rotates together with the threshing drum 22, whereby the processed product comes into contact with the debris conveying valves 53a and is subjected to threshing processing while being transported to the rear portion of the threshing chamber 21. The grain obtained through the threshing processing, short pieces of cut straw, and the like leak from the receiving net 23 and fall into the sorting unit 42. In contrast to this, the processed product (grain culms, long pieces of cut straw, etc.) that cannot leak from the receiving net 23 is discharged to the outside of the threshing chamber 21 from the debris discharge port 54b.

As shown in Fig. 3, the sorting unit 42 is provided with a swinging sorting apparatus 24 and a winnowing fan 25. Sorting air is supplied from the winnowing fan 25 to the swinging sorting apparatus 24. The swinging sorting apparatus 24 performs a swinging operation in an environment in which sorting air is supplied, and sorts grain (first product) as the sorted product among the threshed products. The sorted product is grain sorted by the swinging sorting apparatus 24. Also, the first product collector 26 and the second product collector 27 are arranged below the swinging sorting apparatus 24.

The winnowing fan 25 is provided in the sorting unit 42 and generates sorting air along the transport direction of the processed product. The winnowing fan 25 is provided with a winnowing fan main body having a plurality of rotating blades 25b, and the winnowing fan main body is housed inside a fan case 25a. An upper discharge port 25c for sending the sorting air along the upper surface of an upper grain pan 61 is formed on the upper portion of the fan case 25a. A rear discharge port 25d for sending the sorting air rearward is formed at the rear portion of the fan case 25a.

The first product collector 26 collects the processed product selected as the sorted product among the threshed products as the first product. The processed product is guided to the first product collector 26 by the first product guide 62. That is, the first product collector 26 is formed as a first product screw that transports the first product (grain of the first product) guided by the first product guide 62 in the lateral direction. The first product collected by the first product collector 26 is transported (lifted) upward toward the grain tank 12 by a first product collection transporter 29. The first product transported by the first product collection transporter 29 is transported to the right by a storage screw 30 and supplied to the grain tank 12. The first product collection transporter 29 is constituted by a bucket-type conveyor.

The second product collector 27 collects the processed product that has not been sorted as the sorted product among the threshed products as the second product. The processed product that has not been sorted as the sorted product corresponds to grain, culms, long pieces of cut straw, and the like that have not been sorted by the swinging sorting apparatus 24, and is referred to as the second product. Such a second product is guided to the second product collector 27 by a second product guide 63. That is, the second product collector 27 is formed as a second product screw that transports the second product guided by the second product guide 63 in a lateral direction. The second product collected by the second product collector 27 is transported diagonally upward and frontward by the second product returner 32, and is returned to the upper side (upstream side of the sorting unit 42) relative to the swinging sorting apparatus 24. The second product returner 32 is constituted by a screw-type conveyor.

The first product collector 26 is driven by a first product collection motor M1 (see Fig. 2), which is an electric motor, and the second product collector 27 is driven by a second product collection motor M2 (see Fig. 2), which is an electric motor.

The motive power of the first product collection motor M1 is transmitted to the first product collector 26, is transmitted from the first product collector 26 to the first product collection transporter 29, and is transmitted from the first product collection transporter 29 to the storage screw 30. Here, the first product collection transporter 29 is provided on the right side portion (outside of the right wall) of the threshing apparatus 1, and the first product collection motor M1 is provided on the left side portion of the threshing apparatus 1. That is, the first product collection motor M1 is provided on the side portion of the threshing apparatus 1 on the side opposite to the side on which the first product collection transporter 29 is provided.

The motive power of the second product collection motor M2 is transmitted to the second product collector 27, and is transmitted from the second product collector 27 to the second product returner 32. Here, the second product returner 32 is provided on the right side portion (outside of the right wall) of the threshing apparatus 1, and the second product collection motor M2 is provided on the left side portion of the threshing apparatus 1. That is, the second product collection motor M2 is provided on the side portion of the threshing apparatus 1 that is on the side opposite to the side on which the second product returner 32 is provided.

The swinging sorting apparatus 24 sorts grain from the processed product. The swinging sorting apparatus 24 is arranged below the receiving net 23, and the processed product leaks from the receiving net 23. The swinging sorting apparatus 24 includes a frame-shaped sieve case 33, which performs a swinging operation in the front-rear direction by an eccentric-cam-type swing drive mechanism 43 using an eccentric shaft or the like and is formed in a rectangular shape in a top view.

The sieve case 33 includes a first grain pan 34, a plurality of first sieve lines 35, a second sieve line 36, a second grain pan 37, a first chaff sieve 38, a second chaff sieve 39, a grain sieve 40, an upper grain pan 61, and a lower grain pan 65.

The first chaff sieve 38 having a plurality of chaff lips 38A is arranged rearward of the upper grain pan 61, and a second chaff sieve 39 is arranged rearward of the first chaff sieve 38. Note that the plurality of chaff lips 38A are arranged side by side along the transport direction (front-rear direction) in which the processed product is transported, and each of the plurality of chaff lips 38A is arranged in an inclined orientation that is oriented diagonally upward toward the rear end side. The lower grain pan 65 is arranged below the front end portion of the first chaff sieve 38. The net-like grain sieve 40 is arranged rearward of the lower grain pan 65 in a state of being continuous with the lower grain pan 65. The second chaff sieve 39 is arranged below the rear end portion of the first chaff sieve 38 and rearward of the grain sieve 40.

In the sieve case 33, an air passage for supplying the sorting air supplied from the upper discharge port 25c of the winnowing fan 25 along the upper surface of the upper grain pan 61 and an air passage for supplying the sorting air supplied from the rear discharge port 25d of the winnowing fan 25 along the upper surface of the lower grain pan 65 are formed. A discharger 28 is formed by the rear end portion of the swinging sorting apparatus 24 (the right end portion in Fig. 3) and the rear end portion of the receiving net 23.

In the swinging sorting apparatus 24 of the present embodiment, the processed product in the sieve case 33 is transported toward the body rear side due to the sorting air from the winnowing fan 25 being supplied from the body front side to the body rear side and the sieve case 33 swinging by the swing drive mechanism 43. For this reason, in the following description, in the swinging sorting apparatus 24, the upstream side in the transportation direction of the processed product is referred to as the front end or the front side, and the downstream side is referred to as the rear end or the rear side.

The grain sieve 40 is formed as a net-like body in which a plurality of metal wires are combined in a net-like shape, and is configured to allow grain to leak from the meshes. A first chaff sieve 38 is provided above the grain sieve 40, and grain that has flowed between the chaff lips of the first chaff sieve 38 leaks onto the grain sieve 40.

The sieve case 33 receives a large amount of the processed product that leaks from the receiving net 23. Of the processed product leaking from the receiving net 23 in the sorting unit 42, the processed product received by the upper grain pan 61 is supplied to the front end of the first chaff sieve 38 accompanying the swinging of the sieve case 33.

The first chaff sieve 38 transports the processed product to the rear side through air sorting performed using the sorting air and specific gravity sorting accompanying swinging, and at the same time, leaks grain included in the processed product. Among the processed products subjected to such sorting, culms such as cut straw are delivered to the second chaff sieve 39, are sent out from the rear end of the second chaff sieve 39 toward the rear of the sieve case 33, and are discharged from the discharger 28 toward the waste straw shredding apparatus 13. The culms discharged from the discharger 28 are shredded by the waste straw shredding apparatus 13 and are discharged to the outside of the threshing apparatus 1. Also, the grain that leaks directly onto the second chaff sieve 39 via the receiving net 23 is sorted into grain and culms such as cut straw at the second chaff sieve 39.

Here, considering the state of the processed product leaking from the receiving net 23, among the harvested products supplied to the threshing chamber 21, grain, grain that has been insufficiently processed into single grains, small pieces of straw, and the like leak through the receiving net 23 at an early stage when they are transported in the threshing chamber 21. For this reason, the amount of leakage of the processed product in the upstream region of the receiving net 23 in the transport direction tends to be greater than that in the downstream region of the receiving net 23 in the transport direction. Also, as described above, since the processed product is supplied from the upper grain pan 61 to the front end side portion of the first chaff sieve 38, the amount of the processed product leaking from the front end side portion of the first chaff sieve 38 is greater compared to that of the rear end side portion of the first chaff sieve 38.

Also, the processed product that has leaked through the front end side portion of the first chaff sieve 38 is partially removed by sending part of it to the rear side using the sorting air immediately after leaking, and the processed product including a large amount of grain is received by the upper surface of the grain sieve 40. Furthermore, since the air pressure of the sorting air and the swinging force act on the processed product supplied to the grain sieve 40, the straw and the like included in the processed product are sent toward the rear on the upper surface of the grain sieve 40, and the processed product that leaks through the grain sieve 40 includes a large amount of grain. The grain that has leaked through the grain sieve 40 flows down from the first product guide 62 to the first product collector 26 and is collected, and is stored in the grain tank 12 by the first product collection transporter 29.

Also, although the processed product from the rear region of the first chaff sieve 38 is supplied to the grain sieve 40, the cut straw and the like among the processed product that did not leak through the grain sieve 40 are sent rearward by the sorting air, and therefore the sorting processing is performed without significantly reducing the sorting efficiency in the rear region of the grain sieve 40.

Furthermore, the first product (grain) leaked on the front side relative to the rearmost end of the grain sieve 40 flows down from the first product guide 62 to the first product collector 26, is collected, and is stored in the grain tank 12 by the first product collection transporter 29.

In contrast to this, the processed product that has leaked through the portion at the rearmost end of the grain sieve 40 or the processed product that has fallen from the second chaff sieve 39 flows down from the second product guide 63 to the second product collector 27, is collected, and is returned to the upstream side of the swinging sorting apparatus 24 by the second product returner 32. The processed product that did not fall from the second chaff sieve 39, that is, debris such as straw waste generated by the sorting processing, is sent rearward from the rear end of the swinging sorting apparatus 24, and is discharged from the discharger 28 to the straw waste shredding apparatus 13.

As described above, the second product is returned to the upstream side, which is the front portion of the swinging sorting apparatus 24, by the second product returner 32. Specifically, the second product is returned to a position laterally to the receiving net 23 in the threshing unit 41, which is a position at which the second product does not pass through (does not flow through) the receiving net 23. Accordingly, an insertion hole is formed in the side wall 50 of the threshing unit 41 at a position outside in the radial direction of the circular arc-shaped receiving net 23 , and a second product discharge port 32A of the second product returner 32 is provided in this insertion hole. That is, the second product discharge port 32A of the second product returner 32 is provided at a position outside in the radial direction of the circular arc-shaped receiving net 23, and the second product is discharged at this position. Thus, the threshing apparatus 1 is provided with a return amount detector 71 for detecting the return amount of the second product returned by the second product returner 32. Figs. 4 to 6 show the arrangement mode of the second discharge port 32A.

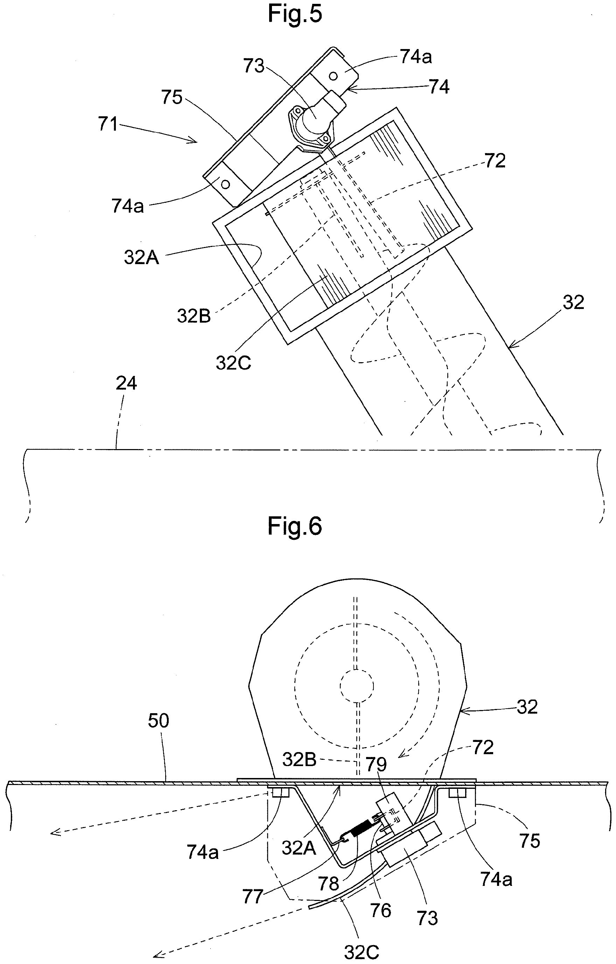

In the present embodiment, as shown in Fig. 4, the second product discharge port 32A is provided toward the receiving net 23 side. As shown in Fig. 5, a rotary blade 32B is provided in the vicinity of the second discharge port 32A. The second product returner 32 is provided with a screw-type conveyor, and the rotary blade 32B rotates integrally with the screw-type conveyor. The second product transported by the second product returner 32 is discharged to the outer side in the radial direction from the second product discharge port 32A by the rotary blade 32B (discharged as indicated by the broken line arrow in Fig. 6).

The second product discharge port 32A is provided with a guide 32C that guides the discharged second product toward the upper side in the processed product transport direction of the swinging sorting apparatus 24. The guide 32C is formed in a shape that forms part of a cylinder having an inner peripheral surface that opposes the second product discharge port 32A. In other words, the guide 32C is formed in a shape obtained by bending a band plate into a circular arc shape. The discharge direction of the second product discharged by the rotating blade 32B is restricted by the inner peripheral surface of the guide 32C, and the second product is discharged toward the upper side in the transfer direction.

As shown in Figs. 5 and 6, the return amount detector 71 is supported by the inner side portion of the side wall 50 of the threshing unit 41. The second product is discharged from the second product discharge port 32A by the rotary blade 32B in the second product returner 32, and the return amount detector 71 is configured to measure the return amount of the second product that is returned by coming into contact with the second product. The return amount detector 71 includes a swing arm 72, a measurement portion 73, a support frame 74 that supports the measurement portion 73 and the swing arm 72, and a cover body 75 that covers the upper part of the return amount detector 71. The swing arm 72 is located on the discharge extension line (on the parabola) which is a trajectory of the second product discharged by the second product returner 32, and swings due to the discharged second product coming into contact therewith. The measurement portion 73 measures the return amount based on the swing angle of the swing arm 72.

The support frame 74 is provided above the second product discharge port 32A. The support frame 74 is formed by bending a strip plate into an approximate L shape, is provided with attachment portions 74a at end portions on both sides, and the attachment portions 74a are bolted to the side wall 50. A potentiometer is built inside the case of the measurement portion 73, and the measurement portion 73 is bolted to a location on the body inner side of the support frame 74. The rotation shaft 76 of the measurement portion 73 is inserted through the support frame 74 and protrudes to the outside of the body (side wall 50 side). The swing arm 72 is attached to the rotation shaft 76, and the swing arm 72 and the rotation shaft 76 are configured to be able to integrally rotate. The swing arm 72 extends downward from the rotation shaft 76 and is provided in a state of being located in a guide path in which the second product is guided by the guide 32C. The swing arm 72 is supported so as to be able to swing about the axis of the rotation shaft 76 serving as the horizontal axis.

The cover body 75 is provided along the upper edge of the support frame 74, and is configured to cover the upper portions of the swing arm 72, the measurement portion 73, and the support frame 74. By providing such a cover body 75, it is possible to prevent fine debris among the threshed products that leak through the receiving net 23 from falling on the swing arm 72 and the measurement portion 73 and hindering the measurement operation.

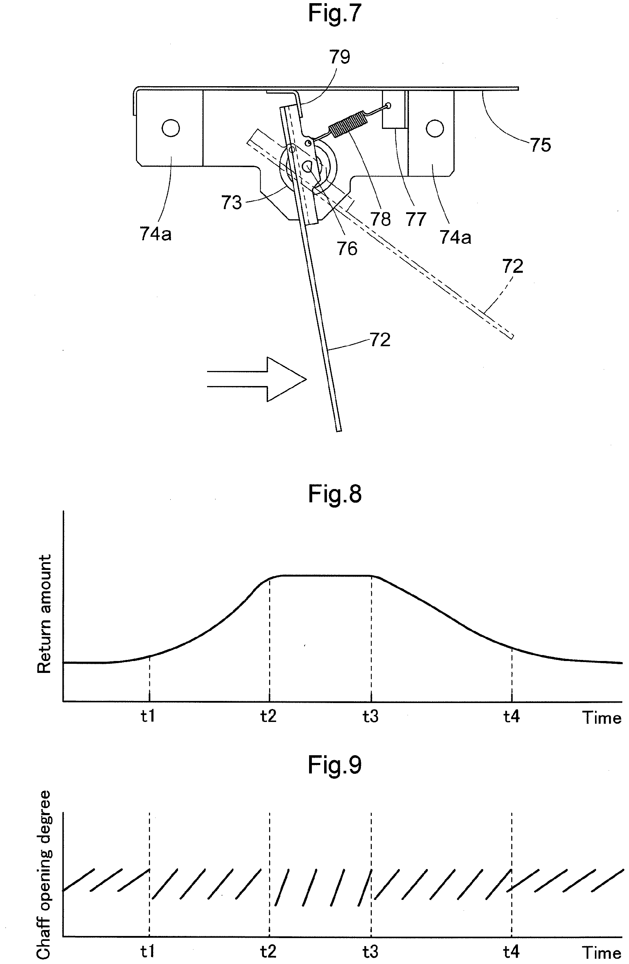

As shown in Fig. 7, the upper end portion of the swing arm 72 extends above the rotation shaft 76. The spring receiving portion 77 is supported by the support frame 74. A coil spring 78 is stretched between the portion of the swing arm 72 that extends above the rotation shaft 76 and the spring receiving portion 77. The swing arm 72 is swing-biased by the pulling biasing force of the coil spring 78 so that the free end portion of the swing arm 72 on the side opposite to the side on which the coil spring 78 is located approaches the second product discharge port 32A. A locking portion 79 is provided on the cover body 75, the upper end portion of the swing arm 72 abuts on the locking portion 79, and the swing arm 72 is positionally held in a downward standby orientation against the spring biasing force.

When the second product is discharged by the rotary blade 32B through the second product discharge port 32A and comes into contact with the swing arm 72, due to the pressing force of the second product, the swing arm 72 swings against the biasing force of the coil spring 78. When the swing arm 72 swings, the portion of the swing arm 72 below the rotation shaft 76 is separated from the second product discharge port 32A. The swing angle is measured by the measurement portion 73, and the return amount of the second product can be obtained based on the measurement result.

As described above, the swinging sorting apparatus 24 sorts the grain as the sorted product from the processed product, but the amount of the sorted product to be sorted can be changed in accordance with the return amount detected by the return amount detector 71. The amount of the sorted product to be sorted being changeable in accordance with the return amount means that the sorting ability of the swinging sorting apparatus 24 can be changed in accordance with the return amount. The sorting ability of the swinging sorting apparatus 24 corresponds to the ratio of the amount of the first product collected by the first product collector 26 to the amount of the processed product leaking from the receiving net 23, that is, the degree of sorting (or the sorting efficiency).

Here, if the amount of the crop reaped by the reaping portion 4 per unit time is constant, the amount of the processed product threshed by the threshing unit 41 per unit time does not change significantly and is constant. For this reason, the amount of processed product leaking from the receiving net 23 to the sorting unit 42 per unit time is also a constant amount. In this case, if the return amount from the second product returner 32 increases, it is envisioned that the number of processed products and second products waiting to be sorted by the swinging sorting apparatus 24 will gradually increase.

In such a case, since the threshing apparatus 1 cannot appropriately perform the threshing processing, in the present embodiment, the swinging sorting apparatus 24 is configured such that the sorting amount increases in accordance with an increase in the return amount. Increasing the sorting amount means increasing the amount of the first product collected by the first product collector 26. Accordingly, the swinging sorting apparatus 24 is configured such that the amount of the first product collected by the first product collector 26 increases in accordance with an increase in the return amount relative to a predetermined threshold amount set in advance.

In this embodiment, the chaff lip 38A is used to increase the sorting amount. As described above, the first chaff sieve 38 is provided with a plurality of chaff lips 38A, and each of the plurality of chaff lips 38A is arranged in an inclined orientation that is oriented diagonally upward toward the rear end side. In the present embodiment, the opening degree of each of the chaff lips 38A can be changed. The opening degree being changeable means that the inclined orientation is changed. Specifically, the closer the chaff lip 38A is to being parallel to the front-rear direction, the smaller the opening degree is, and the closer the chaff lip 38A is to being parallel to the vertical direction, the larger the opening degree is.

In the present embodiment, the chaff lip 38A is configured such that the opening degree increases in accordance with an increase in the return amount. That is, the inclined orientation of the chaff lip 38A is changed to be closer to being parallel to the vertical direction in accordance with an increase in the return amount. As a result, the sorting amount of the first product in the first chaff sieve 38 increases, and it is possible to suppress the increase in the processed product and the second product waiting to be sorted in the swinging sorting apparatus 24.

As described above, the second product is the processed product including grain that has been insufficiently processed into single grains, cut straw, and the like. In view of this, it is preferable that the winnowing fan 25 has a configuration in which the amount of sorting air increases in accordance with an increase in the return amount of the second product by the second product returner 32, such that the cut straw and the like are removed in the first chaff sieve 38 and the grain sieve 40. As a result, the ability of the first chaff sieve 38 and the grain sieve 40 to remove cut straw and the like improves, and even if the opening degree of the chaff lip 38A is large, the inclusion of cut straw and the like into the first product collector 26 can be reduced.

Here, the sorting unit 42 of the present embodiment includes a layer thickness sensor 80 (an example of a "threshed product detector") that detects the amount of processed product leaking from the receiving net 23. Specifically, the layer thickness sensor 80 detects the layer thickness of the processed product that has leaked onto the sieve case 33 from the receiving net 23. Since such a layer thickness sensor 80 is known, description thereof will be omitted here. It is also possible to use a configuration in which the sorting amount in the swinging sorting apparatus 24 is changed in accordance with the amount of the processed product detected by the layer thickness sensor 80, that is, the layer thickness of the processed product on the sieve case 33. Note that the position in the front-rear direction at which the layer thickness sensor 80 is provided may be on the front side relative to the position shown in Fig. 3.

In the above-described configuration, the opening degree of the chaff lip 38A may be increased in accordance with an increase in the layer thickness of the processed product on the sieve case 33 when exceeding a predetermined threshold value. As a result, it is possible to suppress an increase in the amount of the processed product on the sieve case 33. Note that the layer thickness sensor 80 may also perform the above-described control separately (independently) from the return amount detector 71.

Also, both the opening degree of the chaff lip 38A and the amount of the sorting air of the winnowing fan 25 may be changed in accordance with the detection result of the layer thickness sensor 80 (the layer thickness of the processed product on the sieve case 33). Specifically, for example, if the layer thickness of the processed product on the sieve case 33 exceeds a predetermined threshold value, it is preferable to increase the opening degree of the chaff lip 38A and increase the amount of the sorting air of the winnowing fan 25. It is also possible to use a configuration in which, if the layer thickness of the processed product on the sieve case 33 is a predetermined threshold value or less, the opening degree of the chaff lip 38A is reduced and the amount of the sorting air of the winnowing fan 25 is reduced.

Also, as described above, a plurality of debris conveying valves 53a are provided on the inner surface (lower surface) of the top plate 53 in the threshing chamber 21. These debris conveying valves 53a exert a force for moving the processed product rotating together with the threshing drum 22 to the rear side in the threshing chamber 21. The debris conveying valve 53a is configured such that the attachment angle with respect to the top plate 53 can be changed. As a result, the conveying amount in the drum body 60 can be changed. In view of this, it is also possible to use a configuration in which the inclination of the debris conveying valve 53a with respect to the front-rear direction is controlled and the conveying amount of the crops in the drum body 60 is reduced in accordance with an increase in the return amount of the second product by the second product returner 32.

That is, by performing setting such that the conveying amount of the crops in the drum body 60 decreases in accordance with an increase in the return amount of the second product by the second product returner 32 when exceeding a predetermined threshold value, the crop is less likely to fall from the threshing chamber 21, and it is possible to suppress an increase in the amount of the processed product on the sieve case 33.

Furthermore, it is also possible to use a configuration in which the amount of crops supplied to the threshing unit 41 itself is reduced in accordance with an increase in the return amount of the second product by the second product returner 32. As a result, an increase in the amount of the processed product on the sieve case 33 is suppressed. As such a method, for example, it is preferable to use a configuration in which the traveling speed of the travel device body 17 is reduced in accordance with an increase in the return amount of the second product by the second product returner 32.

As described above, the threshing apparatus 1 controls the sorting ability of the swinging sorting apparatus 24 in accordance with the return amount of the second product by the second product returner 32. In other words, the sorting amount by the swinging sorting apparatus 24 (the sorting ability of the swinging sorting apparatus 24) is feedback-controlled based on the return amount of the second product by the second product returner 32. Accordingly, the opening degree of the chaff lip 38A, the amount of the sorting air by the winnowing fan 25, the inclination of the debris conveying valve 53a in the front-rear direction, and the traveling speed of the travel device body 17 correspond to the gain adjustment parameters in the feedback control.

Fig. 8 shows the change over time in the return amount of the second product, and Fig. 9 shows a mode of the chaff lip 38A in which the opening degree is changed in accordance with the return amount. Accompanying an increase in the return amount at time t1 and onward, the opening degree of the chaff lip 38A increases, and the increase in the return amount stops at time t2. Thereafter, the return amount decreases from time t3 to time t4. Accompanying this, the opening degree of the chaff lip 38A returns to the same opening degree as before time t1. In this manner, with the threshing apparatus 1 of the present embodiment, even if the return amount of the second product increases, reduction of the threshing function is suppressed.

### Other Embodiments

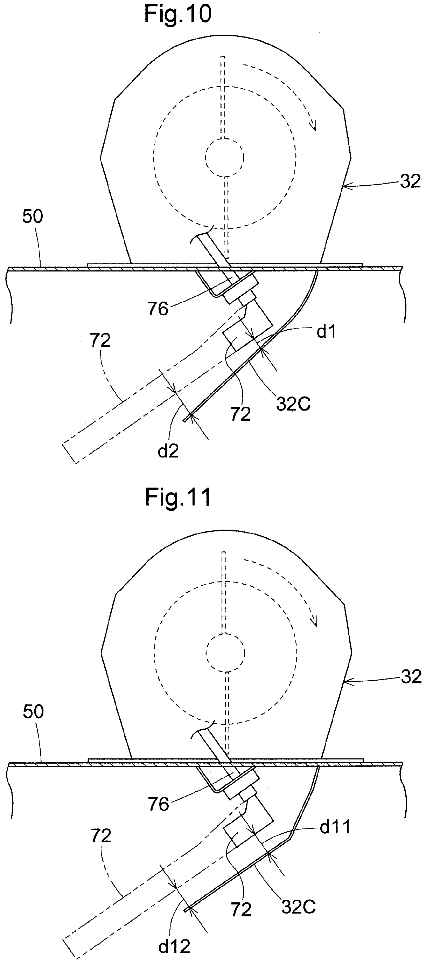

Figs. 10 and 11 show an example of a configuration in which the return amount detector 71 can detect the return amount of the second product with good sensitivity. In the embodiment shown in Figs. 10 and 11, the guide 32C has a planar shape that extends along the swing path of the swing arm 72, and is provided laterally to the swing arm 72 in a state of being adjacent to the swing arm 72 in the swing axis direction of the swing arm 72. The guide 32C is supported in a cantilever fashion on the side wall 50 of the threshing unit 41. Note that the guide 32C may also be supported on both ends by the side wall 50.

In order for the return amount detector 71 to accurately detect the return amount of the second product, it is preferable that the swing arm 72 swings accurately in accordance with the return amount of the second product. In particular, since the second product is guided to the upper side in the transfer direction of the swinging sorting apparatus 24 by the guide 32C, the second product discharged from the second product discharge port 32A is easily concentrated on the guide surface of the guide 32C. For this reason, if the separation distance between the swing arm 72 and the guide 32C changes accompanying the swinging of the swing arm 72, the detection accuracy of the return amount detector 71 is influenced. In particular, if a configuration is used in which the separation distance between the swing arm 72 and the guide 32C decreases the more the swing arm 72 swings, it is thought that the swing arm 72 will suddenly fully swing to the maximum of the swing range at the time when the return amount of the second product exceeds a predetermined amount. If this occurs, a case is conceivable in which the detection value of the measurement portion 73 will remain stuck at the maximum value in the state where the swing arm 72 has fully swung, and if the return amount of the second product is large, the return amount detector 71 cannot accurately measure the return amount. That is, if a configuration is used in which the separation distance between the swing arm 72 and the guide 32C decreases accompanying the swinging of the swing arm 72, the detection sensitivity of the return amount detector 71 decreases when the return amount of the second product is small and the detection sensitivity of the return amount detector 71 becomes excessive when the return amount of the second product is large. For this reason, it is desirable to use a configuration in which the swing arm 72 does not fully swing and the return amount can be measured accurately even if the return amount of the second product is large. Also, since the return amount of the second product is often small, it is preferable to use a configuration in which the return amount detector 71 can detect the return amount of the second product with good sensitivity even if the return amount of the second product is small.

In the embodiment shown in Fig. 10, the support base end portion region of the guide 32C is formed into a circular arc shape, and the guide 32C is formed so as to be closer to a linear shape toward the leading end side (the side away from the side wall 50). The swing arm 72 and the guide 32C approach each other in a state in which the swing arm 72 is positionally held in the downward standby orientation. At this time, the separation distance between the swing arm 72 and the guide 32C is the same over the region from the swing base end portion where the rotation shaft 76 is located to the free end portion located below the rotation shaft 76 of the swing arm 72.

When the second product is discharged from the second product discharge port 32A, the second product comes into contact with the swing arm 72 and the swing arm 72 swings. At this time, the separation distance between the lower region of the swing arm 72 and the guide 32C is greater than the separation distance between the swing base end portion of the swing arm 72 and the guide 32C. In Fig. 10, the state in which the swing arm 72 has swung is indicated by a solid line, and the separation distance between the central portion of the swing arm 72 in the lengthwise direction indicated by the solid line and the guide 32C is indicated by the distance d1.

When the contact amount between the second product and the swing arm 72 increases and the swing arm 72 swings further, the separation distance between the lower region of the swing arm 72 and the guide 32C further increases. In Fig. 10, the state in which the swing arm 72 has swung further is indicated by a broken line, and the separation distance between the central portion of the swing arm 72 in the lengthwise direction indicated by the broken line and the guide 32C is indicated by the distance d2. The distance d2 is greater than the distance d1. That is, in accordance with an increase in the swing amount of the swing arm 72, the gap between the guide 32C and the swing arm 72 (the space or region between the edge of the swing arm 72 on the guide 32C side extending between the base end portion and the free end portion and the guide 32C) increases, and the second product slips more easily through the gap between the side portion of the swing arm 72 and the guide 32C. In other words, the guide 32C is configured such that when the swing arm 72 comes into contact with the second product and swings, the separation distance between the side portion of the swing arm 72 and the guide 32C increases in accordance with an increase in the swing amount.

The guide 32C may also be formed in a bent shape as shown in Fig. 11. The guide 32C is formed by bending in a direction toward the front of the body between the support base end portion and the leading end portion of the guide 32C. The guide 32C has a flat planar shape along the swing path of the swing arm 72, and is provided laterally to the swing arm 72 in a state of being adjacent to the swing arm 72 in the swing axis direction of the swing arm 72.

With the shape of the guide 32C shown in Fig. 11, the guide 32C is configured such that the separation distance between the side portion of the swing arm 72 and the guide 32C is the same regardless of the magnitude of the swing amount when the swing arm 72 comes into contact with the second product and swings. In Fig. 11, the state in which the swing arm 72 has swung is indicated by a solid line, and the separation distance between the central portion of the swing arm 72 in the longitudinal direction indicated by the solid line and the guide 32C is indicated by the distance d11. The state in which the swing arm 72 has swung further is indicated by a broken line, and the separation distance between the central portion of the swing arm 72 in the lengthwise direction indicated by the broken line and the guide 32C is indicated by the distance d12. The distance d11 and the distance d12 are the same. That is, the size of the gap between the guide 32C and the swing arm 72 is constant or approximately constant regardless of the swing amount of the swing arm 72.

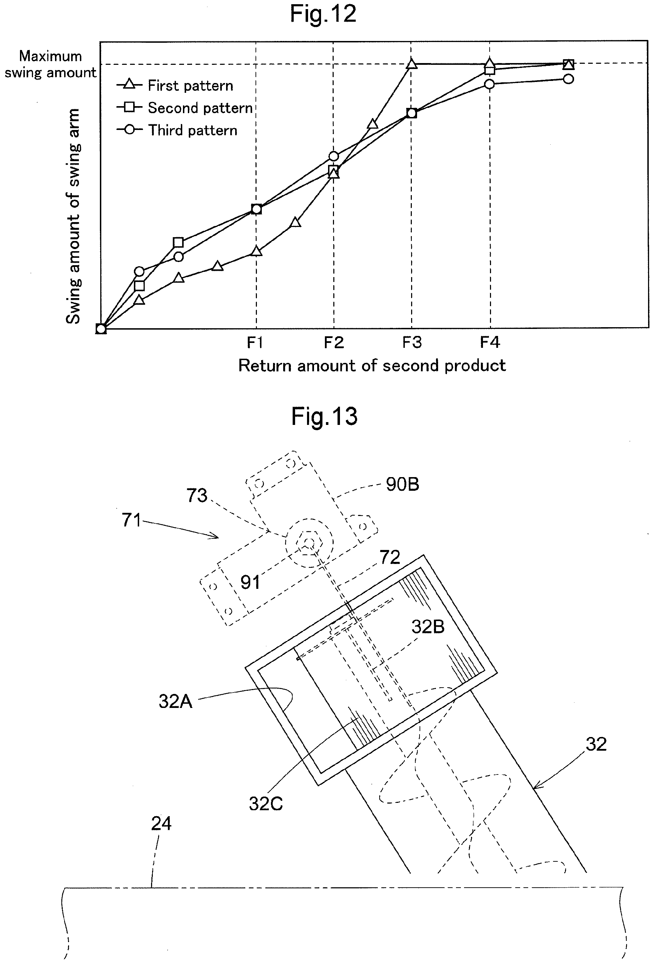

In Fig. 12, the relationship between the return amount of the second product and the swing amount of the swing arm 72 is indicated by a line graph. The configuration in which the separation distance between the swing arm 72 and the guide 32C decreases the more the swing arm 72 swings is indicated by the "first pattern". The configuration in which the separation distance between the swing arm 72 and the guide 32C increases the more the swing arm 72 swings, that is, the configuration shown in Fig. 10, is indicated by the "second pattern". The configuration in which the separation distance between the side portion of the swing arm 72 and the guide 32C is the same regardless of the magnitude of the swing amount of the swing arm 72, that is, the configuration shown in Fig. 11, is indicated by the "third pattern".

In the range where the return amount of the second product is between zero and F1, the swing amount of the swing arm 72 in the line graph of the second pattern is greater than the swing amount of the swing arm 72 in the line graph of the first pattern. Also, in the range where the return amount of the second product is between zero and F1, the swing amount of the swing arm 72 in the line graph of the third pattern is greater than the swing amount of the swing arm 72 in the line graph of the first pattern. Therefore, in the second pattern and the third pattern, the swing arm 72 swings firmly even if the return amount of the second product is small compared to the case of the first pattern, and the measurement sensitivity of the return amount detector 71 in the region where the return amount is low is high.

In the line graph of the first pattern, when the return amount approaches the region of F2, the swing amount of the swing arm 72 suddenly increases, and when the return amount reaches the region of F3, the swing amount of the swing arm 72 fully swings to the maximum, and the return amount detector 71 cannot measure a return amount higher than that. In the line graphs of the second pattern and the third pattern, even if the return amount approaches the region of F2, the swing amount of the swing arm 72 does not increase rapidly, and the line graph of the first pattern surpasses the line graphs of the second pattern and the third pattern.

In the first pattern, in accordance with an increase in the swing amount of the swing arm 72, the separation distance between the side portion of the swing arm 72 and the guide 32C is reduced, and therefore the degree of contact between the second product and the swing arm 72 increases, and the swing amount of the swing arm 72 further increases in accordance with an increase in the amount of the second product. In the second pattern, in accordance with an increase in the swing amount of the swing arm 72, the separation distance between the side portion of the swing arm 72 and the guide 32C is increased, and therefore second product easily slips through the gap between the side portion of the swing arm 72 and the guide 32C and the swing amount of the swing arm 72 is suppressed. In the second pattern, the separation distance between the side portion of the swing arm 72 and the guide 32C is the same regardless of the magnitude of the swing amount, and therefore the frequency of contact between the second product and the swing arm 72 is low and the swing amount of the swing arm 72 is suppressed compared to the case of the first pattern.

In the line graph of the second pattern, when the return amount approaches the region of F4, which is greater than F3, the swing amount of the swing arm 72 reaches the maximum or substantially the maximum. In this manner, in the case of the second pattern, compared to the case of the first pattern, the return amount detector 71 can measure the return amount with good sensitivity even if the return amount of the second product is small, and can measure the magnitude of the return amount in a wide range.

Also, in the line graph of the third pattern, when the return amount approaches the region of F4, which is greater than F3, the swing amount of the swing arm 72 reaches the maximum or substantially the maximum. In this manner, in the case of the third pattern, compared to the case of the first pattern, the swing arm 72 is less likely to fully swing and the return amount detector 71 can measure the magnitude of the return amount in a wider range.

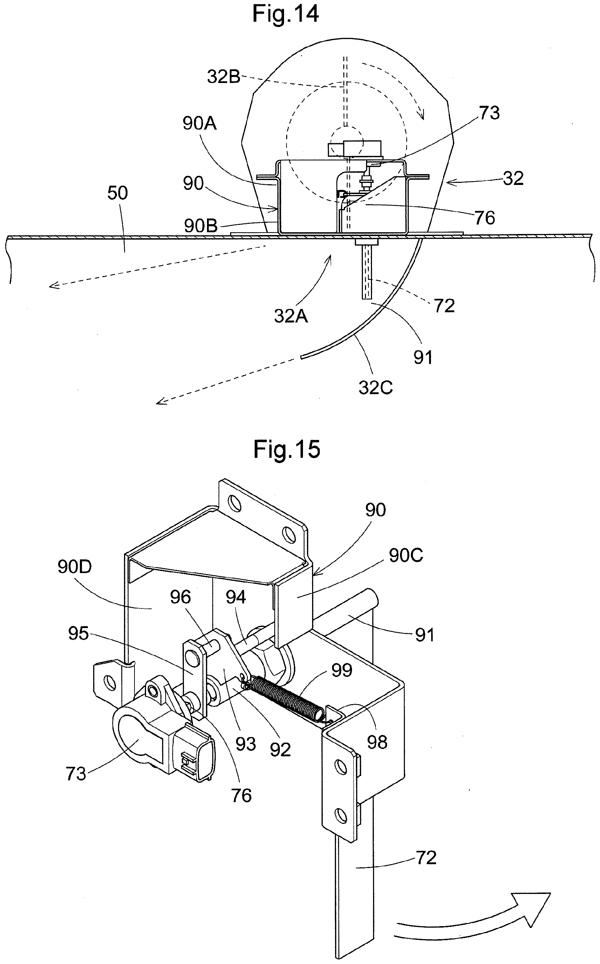

In the above embodiment, a configuration was used in which the return amount detector 71 is supported by the inner side portion of the side wall 50, but as shown in Figs. 13 and 14, it is also possible to use a configuration in which the return amount detector 71 is supported by the outer side portion of the side wall 50.

In this embodiment, the return amount detector 71 includes a swing arm 72 and a measurement portion 73, similarly to the above embodiment. As shown in Figs. 13 and 14, the support frame 90 that supports the swing arm 72 and the measurement portion 73 is formed in an approximate box shape, and is fixed and supported on the outer surface of the side wall 50 by bolting. The measurement portion 73 is supported by the outer surface 90A of the support frame 90. The rotating shaft 76 of the measurement portion 73 passes through the outer surface 90A of the support frame 90 and protrudes to the side where the side wall 50 is located. The rotation support shaft 91 of the swing arm 72 is rotatably supported by a pivot boss 92 through which the inner side surface 90B of the support frame 90 is inserted. The rotation support shaft 91 passes through the inner side surface 90B and extends to the side where the measurement portion 73 is located. The swing arm 72 extends downward from the rotation support shaft 91 on the body inner side relative to the side wall 50. The swing arm 72 is provided in a state of being located in a guide path on which the second product is guided by the guide 32C.

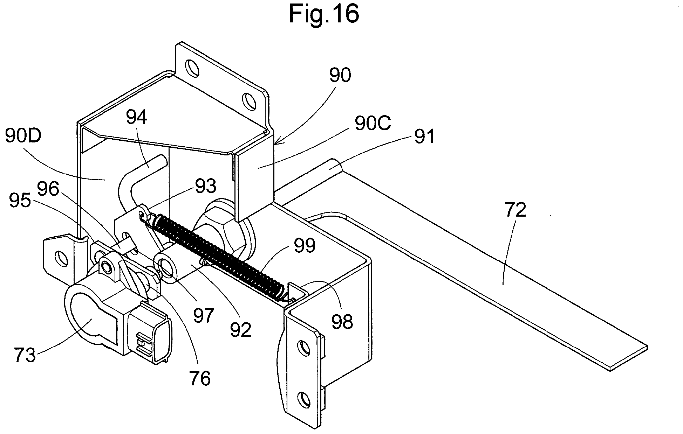

As shown in Fig. 15, at a location on the outer side relative to the side wall 50 of the rotation support shaft 91, a linking member 93 extending outward in the radial direction and a contact member 94 obtained by bending a rod body in an approximate L shape are provided in a state of being integrally rotated with the rotating support shaft 91. Also, the rotating shaft 76 of the measuring unit 73 is provided with an operating arm 95 extending outward in the radial direction. A locking pin 96 extending toward the side wall 50 is provided on the free end side of the operation arm 95. The locking pin 96 is engaged and linked to the linking member 93 in a state of being inserted through an insertion hole 97 formed in the linking member 93. The insertion hole 97 is an elongated hole that is longer in the radial direction. A coil spring 99 is stretched between the linking member 93 and the spring receiving portion 98 of the support frame 90, and the swing arm 72 is biased to return to the downward standby orientation (see Fig. 15) due to the biasing force of the coil spring 99. The abutting member 94 abuts on a front side surface 90C of the support frame 90, and the swing arm 72 is positionally held in the standby orientation. When the return amount of the second product increases, the swing arm 72 is pushed by the second product and swings. The abutting member 94 is restricted by abutting on the rear side surface 90D of the support frame 90 (see Fig. 16) at the maximum swing position. Due to this configuration, the axes of the rotation shaft 76 of the measurement portion 73 and the rotation support shaft 91 of the swing arm 72 do not need to be accurately aligned with each other and thus assembly is easier.

When the second product discharged from the second product discharge port 32A by the rotary blade 32B comes into contact with the swing arm 72, the swing arm 72 swings in the direction away from the second product discharge port 32A against the biasing force of the coil spring 99 due to the pressing force of the second product. Along with this, the rotation shaft 76 of the measurement portion 73 is operated to rotate via the operating arm 95, the locking pin 96, and the linking member 93, and the swing angle of the swing arm 72 is measured. Then, the return amount of the second product can be obtained based on the measurement result of the swing angle.

In the above-described embodiment, the return amount detector 71 is configured to include the swing arm 72 and the measurement portion 73 for measuring the swing angle of the swing arm 72, but instead of this configuration, the following configuration may also be used.

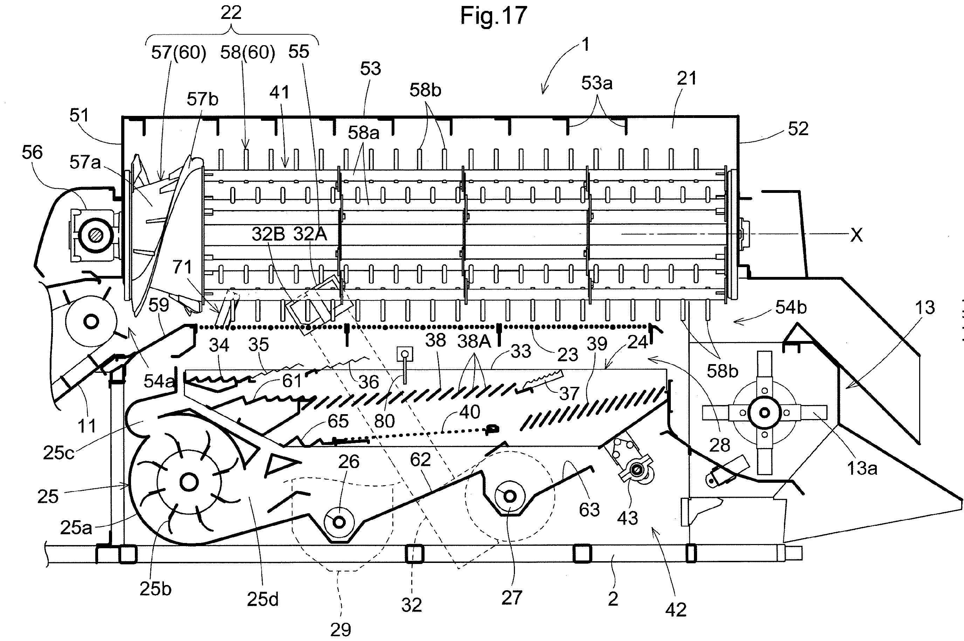

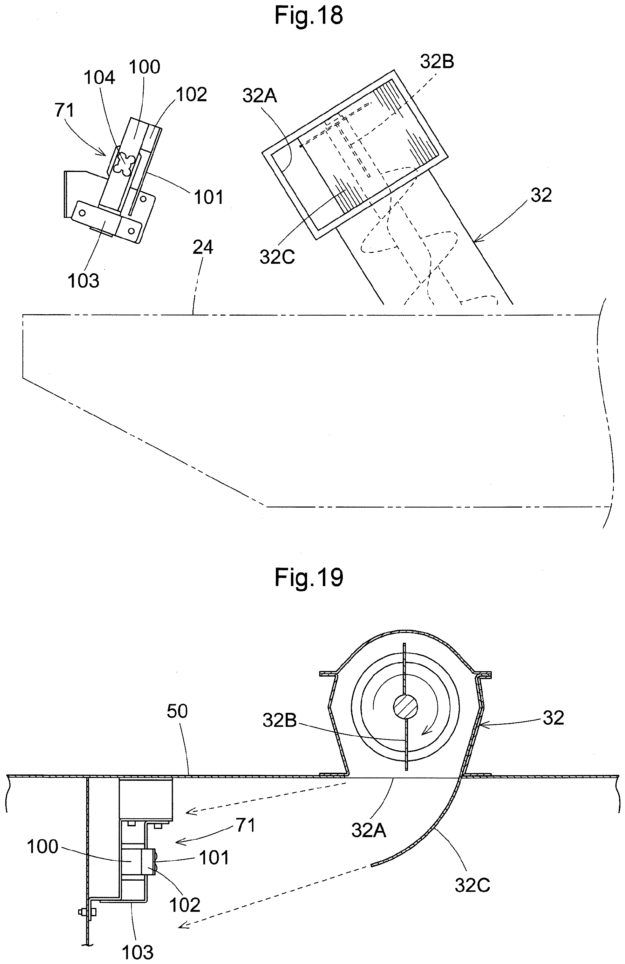

In this embodiment, as shown in Figs. 17 to 19, the return amount detector 71 is provided ahead in the discharge direction restricted by the guide 32C. Also, the return amount detector 71 has a cuboid pressure-sensitive portion 100, a pressure-receiving portion 101, and a support portion 102. The pressure-sensitive portion 100 is formed using a known piezoelectric material. The pressure-sensitive portion 100 is fixed to the non-rotating portion of the threshing unit 41 via a bracket 103 (see Fig. 19). The pressure-receiving portion 101 is provided in a thin plate shape. The pressure-receiving portion 101 is connected to the pressure-sensitive portion 100 via the supporting portion 102 such that the pressure-sensitive portion 100 can detect the pressure from the second product guided by the guide 32C. In order to make the pressure-sensitive portion 100 more likely to bend in response to the pressure from the second product, between the end portion to which the support portion 102 is connected and the end portion fixed to the bracket 103, a through hole 104 is provided that penetrates in a direction orthogonal to both the direction of a line connecting the two end portions and the stacking direction of the pressure-sensitive portion 100 and the pressure-receiving portion 101. Accordingly, the return amount detector 71 can detect the return amount of the second product.

In the above-described embodiment, description was given taking an example of a case where the threshing apparatus 1 is mounted on the combine 20, but the threshing apparatus 1 may also be mounted on a work vehicle different from the combine 20, or may be applied to a work vehicle in which only the threshing apparatus 1 is mounted.

In the above-described embodiment, regarding the swinging sorting apparatus 24, it was described that the amount of the processed product to be sorted is changed in accordance with the return amount, but for example, it is also possible to use a configuration in which the sorting amount of the swinging sorting apparatus 24 is not changed in accordance with the return amount, but notification is performed if the return amount detected by the return amount detector 71 exceeds a predetermined amount.

In the above-described embodiment, it was described that the sorting amount of the swinging sorting apparatus 24 is increased in accordance with an increase in the return amount, but the change amount for increasing the sorting amount of the swinging sorting apparatus 24 may also be changed in accordance with the change amount by which the return amount increases, or the increase amount of the sorting amount may also be changed if the return amount exceeds a set value.

In the above-described embodiment, the chaff lip 38A was described as having a larger opening degree the greater the return amount is, but the amount of change in the opening degree of the chaff lip 38A may also be changed in accordance with the amount of change by which the return amount increases, or the opening degree may also be changed if the return amount exceeds a set value. Furthermore, a configuration may also be used in which if the return amount is smaller than a preset reference amount, the opening degree of the chaff lip 38A is reduced.

In the above embodiment, it was described that the amount of sorting air of the winnowing fan 25 is increased in accordance with an increase in the return amount, but the amount of change in the amount of air of the winnowing fan 25 may also be changed in accordance with the amount of change by which the return amount increases, or the amount of the sorting air may also be changed if the return amount exceeds a set value.

In the above-described embodiment, the sorting unit 42 was described as including the layer thickness sensor 80, but the sorting unit 42 can also be formed without including the layer thickness sensor 80.

It is also possible to use a configuration in which the opening degree of the chaff lip 38A is changed based on the detection results of both the layer thickness sensor 80 and the return amount detector 71 (considering the detection results of both).

In the above-described embodiment, the threshing drum 22 was described as reducing the conveying amount of the crops in the drum body 60 in accordance with an increase in the return amount, but the amount of change in the conveying amount of the threshing drum 22 may also be changed in accordance with the change amount by which the return amount increases, or the conveying amount may also be changed if the return amount exceeds a set value. Of course, it is also possible to use a configuration in which the conveying amount of the crop in the drum body 60 is not changed, regardless of the return amount.

In the above-described embodiment, it was described that the traveling speed of the travel device body 17 is reduced in accordance with the return amount, but the change amount by which the traveling speed of the travel device body 17 is reduced may also be changed in accordance with the change amount by which the return amount increases, or the traveling speed may also be changed if the return amount exceeds a set value.

In the above-described embodiment, a configuration was used in which the first product collector 26 and the second product collector 27 are driven by an electric motor, but instead of this configuration, it is also possible to use a configuration in which the motive power from the engine E is transmitted via a transmission belt.

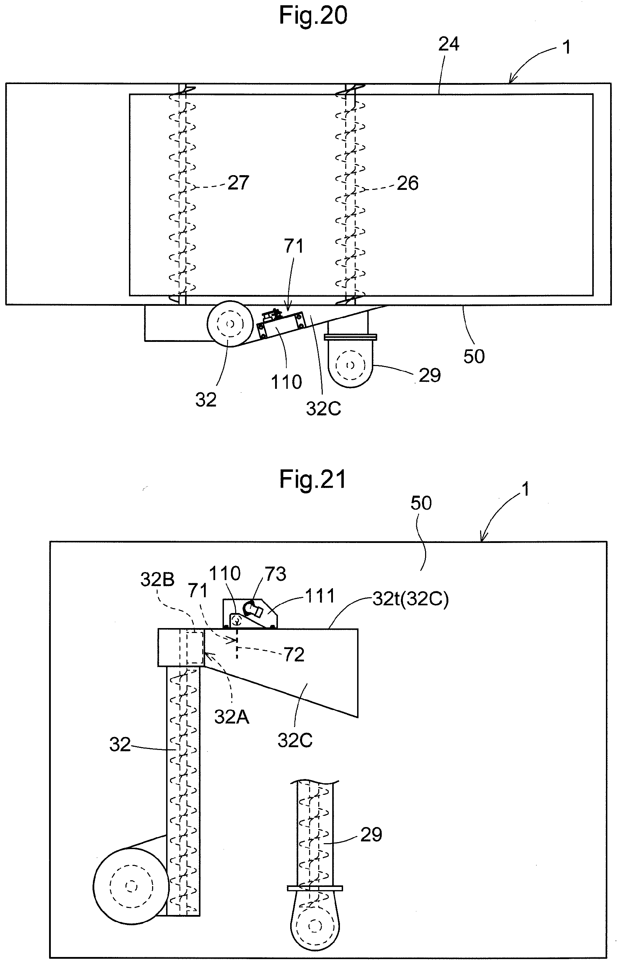

Figs. 20 to 23 show an example of a configuration in which the return amount detector 71 can detect the return amount of the second product with good sensitivity. In the embodiment shown in Figs. 20 to 23, the second product returner 32 extending vertically is supported on the right side surface of the side wall 50 on the body right side. The second product collected by the second product collector 27 is transported upward by the second product returner 32 and is returned to the upper side relative to the swinging sorting apparatus 24.

The second product discharge port 32A and the guide 32C formed in a box shape are provided at the upper end portion of the second product returner 32. The second product discharge port 32A is located on the body right side (the outer side with respect to the threshing apparatus 1) relative to the side wall 50 on the body right side. The guide 32C is interposed between the second product discharge port 32A and the side wall 50 in a state of being located on the body front side of the second product discharge port 32A. The guide 32C is located on the body front side of the second product discharge port 32A. The guide 32C is formed so as to be closer to the side wall 50 toward the front side relative to the second discharge port 32A in a plan view. That is, the guide 32C is formed so as to bulge to the body right side relative to the side wall 50 on the right side, corresponding to the position and shape of the second product discharge port 32A. Also, the guide 32C is formed wider in the vertical direction toward the front side relative to the second product discharge port 32A. That is, the guide 32C is formed so as to have a diverging shape toward the front side relative to the second product discharge port 32A.

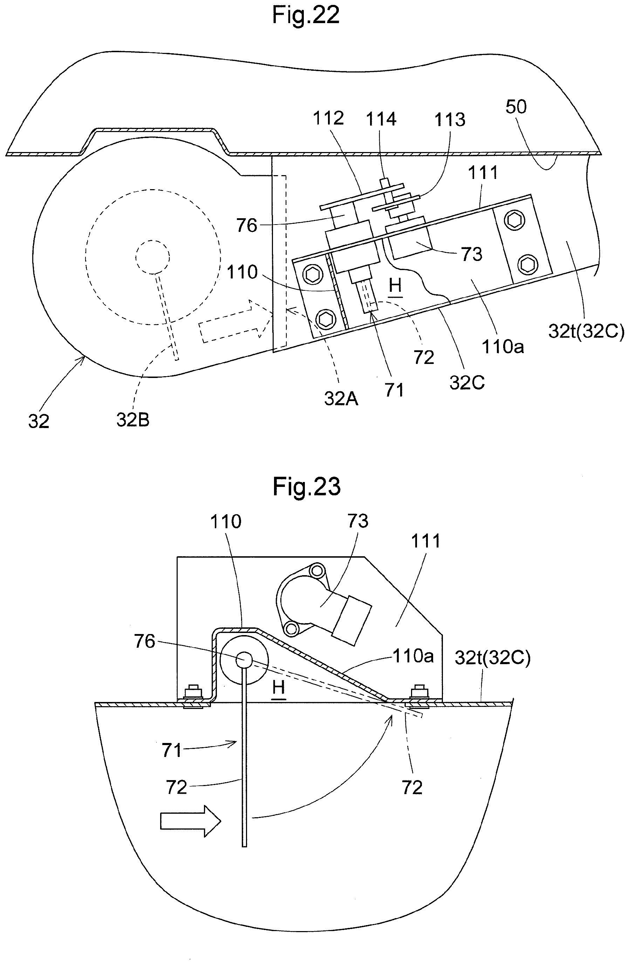

The rotary blade 32B rotates counterclockwise in the plan view of Fig. 22. The second product discharged from the second product discharge port 32A by the rotary blade 32B is guided to the upper side in the transfer direction of the swinging sorting apparatus 24 along the surface on the inner peripheral side of the guide 32C.

A top plate 32t is formed at the upper end portion of the guide 32C shown in Figs. 20 to 23, and an opening is formed in the top plate 32t. Also, a bulging portion 110 is provided on the top plate 32t so as to cover this opening. The bulging portion 110 bulges upward relative to the top plate 32t, and a bulging space H is formed inside the bulging portion 110.

The rotation shaft 76 of the swing arm 72 is supported by the bulging portion 110. The swing arm 72 penetrates through the opening of the top plate 32t and can swing over the bulging space H and the space on the swinging sorting apparatus 24 side in the guide 32C. The bulging portion 110 is formed such that the portion located directly above the rotation shaft 76 is the highest position of the bulging portion 110. Also, an inclined surface 110a is formed on the body front portion of the bulging portion 110, and the inclined surface 110a approaches the upper end portion of the guide 32C toward the body front side. Note that in order to show the swing arm 72 in an easily comprehensible manner, the inclined surface 110a in Fig. 22 shows only the portion on front lower side.

The inner peripheral side surface of the guide 32C shown in Figs. 20 to 23 has a flat planar shape along the swing path of the swing arm 72. The swing arm 72 is provided laterally to the surface on the inner peripheral side of the guide 32C in a state of being adjacent to the surface on the inner peripheral side of the guide 32C in the direction of the swing axis of the swing arm 72. The guide 32C is configured such that, when the swing arm 72 comes into contact with the second product and swings, the separation distance between the side portion of the swing arm 72 and the guide 32C is the same regardless of the magnitude of the swing amount. That is, the size of the gap between the guide 32C and the swing arm 72 is constant or approximately constant regardless of the swing amount of the swing arm 72.

When the amount of the second product discharged from the second product discharge port 32A increases and the swing arm 72 swings significantly, the swing arm 72 and the front lower end portion of the inclined surface 110a come into contact with each other, and the swing arm 72 stops swinging. In other words, due to the swing arm 72 and the front lower end portion of the inclined surface 110a coming into contact with each other, the swing arm 72 fully swings to the maximum. In this state, substantially the entirety of the swing arm 72 other than the free end portion is located above the guide 32C and is housed in the bulging portion 110. At this time, since the second product discharged along the inner peripheral side surface of the guide 32C touches only the free end portion of the swing arm 72, most of the second product does not touch the swing arm 72 and is guided upward in the transfer direction of the swinging sorting apparatus 24.

A stay 111 is provided on the body left side of the bulging portion 110, and the stay 111 is supported by the bulging portion 110. Although not shown in the drawings, the stay 111 is coupled to and supported by the side wall 50 on the body right side. The measurement portion 73 is supported by the stay 111. A through hole is formed in the stay 111, and the rotating shaft 76 penetrates through the through hole. An operating arm 112 is provided at an end portion of the rotating shaft 76 on the side opposite to the side where the swing arm 72 is located with the stay 111 interposed therebetween, and the operating arm 112 extends outward in the radial direction of the rotating shaft 76. Also, an operating arm 113 is provided on the rotation axis of the measurement portion 73, and the operating arm 113 extends outward in the radial direction. A circular hole is formed in one of the operating arm 112 and the operating arm 113, and an elongated hole is formed in the other of the operating arm 112 and the operating arm 113. The elongated hole extends along the other longitudinal direction. Also, the operating arm 112 and the operating arm 113 are coupled by a pin by inserting one pin 114 through the one circular hole and the other elongated hole. As a result, the swing arm 72 that rotates integrally with the rotating shaft 76 and the measurement portion 73 are interlocked and coupled to each other via the operating arm 112, the operating arm 113, and the pin 114.

The configuration disclosed in the above-described embodiment (including other embodiments; the same applies hereinafter) can be applied in combination with the configuration disclosed in other embodiments as long as there is no contradiction. Also, the embodiment disclosed in this specification is an example, and the embodiment of the present invention is not limited to this, and can be modified as appropriate without departing from the object of the present invention.

### Industrial Applicability

The present invention can be used in a threshing apparatus that includes a threshing unit that has a receiving net and threshes crops, and a sorting unit that is provided below the threshing unit and sorts grain from a threshed product that has leaked from the receiving net.

### Description of Reference Signs

- 1: Threshing apparatus
- 17: Travel device body
- 22: Threshing drum
- 23: Receiving net
- 24: Swinging sorting apparatus (sorter)
- 25: Winnowing fan
- 26: First product collector
- 27: Second product collector
- 32: Second product returner
- 32C: Guide portion
- 38: First chaff sieve (chaff sieve)
- 38A: Chaff sieve
- 41: Threshing unit
- 42: Sorting unit
- 50: Side wall
- 55: Rotation support shaft (threshing drum shaft)
- 58b: Threshing tooth
- 60: Drum body
- 71: Return amount detector
- 72: Swing arm
- 73: Measurement portion
- 75: Cover body
- 80: Layer thickness sensor (threshed product detector)

## Claims

1. A threshing apparatus comprising:
a threshing unit that has a receiving net and is configured to thresh a crop; and
a sorting unit that is provided below the threshing unit and is configured to sort grain from a threshed product that has leaked from the receiving net,
wherein the sorting unit includes:
a sorter configured to sort the grain as a sorted product from the threshed product;
a first product collector configured to collect the sorted product as a first product;
a second product collector configured to collect, as a second product, the threshed product that was not sorted as the sorted product;
a second product returner configured to return the second product collected by the second product collector to the sorter; and
a return amount detector configured to detect a return amount of the second product to be returned to the sorter.

2. The threshing apparatus according to claim 1,
wherein the sorter has a sorting amount of the threshed product to be sorted as the sorted product which sorting amount is changed in accordance with the return amount.

3. The threshing apparatus according to claim 2,
wherein the sorting amount of the sorter is increased in accordance with an increase in the return amount.

4. The threshing apparatus according to claim 3,
wherein the sorter is provided with a chaff sieve including a plurality of chaff lips that are arranged side by side in a transport direction in which the threshed product is transported, the plurality of chaff lips each having a changeable opening degree, and
the opening degree of each of the chaff lips is increased in accordance with an increase in the return amount.

5. The threshing apparatus according to claim 4,
wherein the sorting unit is provided with a winnowing fan configured to generate sorting air along the transport direction in an amount that is increased in accordance with an increase in the return amount.

6. The threshing apparatus according to any one of claims 2 to 5,
wherein the sorting unit is provided with a threshed product detector configured to detect an amount of the threshed product that leaks from the receiving net, and
the sorting amount of the sorter is changed in accordance with the amount of the threshed product.

7. The threshing apparatus according to any one of claims 1 to 6,
wherein the threshing unit includes a threshing drum that has a cylindrical drum body with an outer peripheral portion to which a plurality of threshing teeth are attached, and a threshing drum shaft that supports the drum body, and
the drum body conveys the crop in an amount that is reduced in accordance with an increase in the return amount.

8. The threshing apparatus according to any one of claims 1 to 7,
wherein the threshing unit and the sorting unit are provided in a travel device body, and
the travel device body has a traveling speed that is reduced in accordance with an increase in the return amount.

9. The threshing apparatus according to any one of claims 1 to 8,
wherein the return amount detector is configured to measure the return amount by coming into contact with the second product discharged by the second product returner.

10. The threshing apparatus according to claim 9,
wherein the return amount detector includes (i) a swing arm that is located on a discharge extension line which is a trajectory of the second product discharged by the second product returner and that swings in response to the discharged second product coming into contact therewith and (ii) a measurement portion configured to measure the return amount based on a swing angle of the swing arm.

11. The threshing apparatus according to claim 10,
wherein the second product returner includes a guide configured to guide the discharged second product toward the swing arm.

12. The threshing apparatus according to claim 11,
wherein the guide has a planar shape extending along a swing path of the swing arm, and is provided laterally to the swing arm and adjacent to the swing arm in a swing axis direction of the swing arm, and
the guide is configured such that when the swing arm swings in response to contact with the second product, a separation distance between a side portion of the swing arm and the guide increases in accordance with an increase in an amount of the swing.

13. The threshing apparatus according to claim 11,
wherein the guide has a planar shape extending along a swing path of the swing arm, and is provided laterally to the swing arm and adjacent to the swing arm in a swing axis direction of the swing arm, and
the guide is configured such that when the swing arm swings in response to contact with the second product, a separation distance between a side portion of the swing arm and the guide is unchanged, regardless of a magnitude of an amount of the swing.

14. The threshing apparatus according to any one of claims 9 to 13,
wherein the return amount detector is supported by a side wall of the threshing unit.

15. The threshing apparatus according to claim 14,
wherein the return amount detector is supported on an outer side portion of the side wall.

16. The threshing apparatus according to claim 14,
wherein the return amount detector is supported on an inner side portion of the side wall.

17. The threshing apparatus according to claim 16, further comprising:
a cover body for covering an upper portion of the return amount detector.
